# FASCICULE DE BREVET EUROPEEN

(11) **EP 1 536 592 B1**
(45) Date de publication et mention de la délivrance du brevet: **09.08.2006**
(21) Numéro de dépôt: 03292926.7
(22) Date de dépôt: 26.11.2003
(51) Int. Cl.: H04L 12/28, H04Q 7/38

(54) **Authentification entre un terminal mobile de réseau cellulaire et un point d'accès de réseau de faible portée**
Authentifizierung zwischen einer zellularen Mobilendgerät und einem kurzreichweitigen Zugangspunkt
Authentication between a cellular mobile terminal and a short range access point

(43) Date de publication de la demande: 01.06.2005
(73) Titulaire: FRANCE TELECOM, 75015 Paris (FR)
(72) Inventeur: Calmels, Benoît, 14000 Caen (FR); Maguy, Christophe, 14750 St Aubin sur Mer (FR); Trillaud, Sébastien, 35530 Servon sur Vilaine (FR)
(74) Mandataire: Cabinet Martinet & Lapoux

(56) Documents cités:
- WO-A-02/07135
- FR-A- 2 825 869
- US-A1- 2002 031 228
- US-A1- 2003 134 642
- BLUMENTHAL U ET AL: "A SCHEME FOR AUTHENTICATION AND DYNAMIC KEY EXCHANGE IN WIRELESS NETWORKS" BELL LABS TECHNOLOGY, BELL LABORATORIES, MURREY HILL, NJ, US, vol. 2, no. 7, 2002, pages 37-48, XP001141703 ISSN: 1089-7089
- "SPECIFICATION OF THE BLUETOOTH SYSTEM" BLUETOOTH - SPECIFICATION, vol. 1, 1 décembre 1999 (1999-12-01), XP002175286 Extrait de l'Internet: <URL:http://www.bluetooth.com/developer/sp ecification/core_10_b.pdf> [extrait le 2001-08-20]

## Description

La présente invention concerne d'une manière générale l'établissement d'une connexion entre un point d'accès d'un réseau sans fil de faible portée, du type Bluetooth ou Wi-Fi, et un terminal mobile d'un réseau cellulaire du type GSM équipé d'un module émetteur-récepteur pour communiquer avec un point d'accès du réseau de faible portée. Elle concerne plus particulièrement la génération d'une clé de liaison lors de l'authentification du terminal mobile et du point d'accès de manière à les appairer.

En matière de sécurité d'une liaison radio notamment Bluetooth, par exemple un usager souhaitant établir une liaison Bluetooth entre un ordinateur personnel portable et un terminal mobile cellulaire saisit un code d'identification PIN à titre de clé secrète aux claviers de l'ordinateur et du terminal mobile. L'ordinateur et le terminal mobile établissent chacun une clé de liaison en fonction de nombres aléatoires échangés entre eux, de la clé secrète, et des adresses Bluetooth de l'ordinateur et du terminal mobile. Si par exemple l'ordinateur personnel est considéré comme l'authentificateur de la liaison, celui-ci génère un nombre aléatoire (challenge) qu'il communique par l'interface radio Bluetooth au terminal mobile. Le terminal calcule une réponse dépendant du nombre aléatoire reçu, de la clé de liaison et de l'adresse Bluetooth du terminal mobile afin que l'ordinateur compare la réponse du terminal à celle qu'il a calculée lui-même, ce qui authentifie le terminal mobile lorsqu'il y a identité des réponses comparées.

L'appairage de l'ordinateur et du terminal nécessite une clé secrète (code PIN) pour partager la clé de liaison. La clé secrète doit être suffisamment longue et absente de dictionnaires afin que la clé secrète ne soit pas exposée à des attaques dont l'objectif est de retrouver celle-ci pour en déduire la clé de liaison et autre clé de chiffrement. De telles attaques remettent en cause l'authentification et l'intégrité des données échangées.

Pour se prémunir de ces attaques, la clé secrète doit être relativement longue, ce qui engendre une saisie laborieuse et sujette à des erreurs, notamment dans le terminal mobile dont l'interface homme-machine est limitée.

La demande de brevet US 2002/031228 A1 divulgue un dispositif d'accès par exemple pour ouvrir une porte de chambre d'hôtel. Le dispositif d'accès peut être connecté via une liaison Bluetooth à un terminal mobile d'un réseau de télécommunications cellulaire. Le terminal mobile requiert une connexion avec un serveur associé à l'hôtel via le réseau cellulaire ou une liaison Bluetooth. Le serveur transmet alors une clé au terminal mobile. Après une connexion au dispositif d'accès, le terminal mobile envoie la clé au dispositif d'accès qui compare la clé reçue à une clé mémorisée dans le dispositif d'accès afin de la valider et fournir l'accès à la chambre. Aucune authentification du terminal mobile par le dispositif d'accès n'est prévue.

L'article de Uri Blumenthal et al., "A Scheme for Authentification and Dynamic Key Exchange in Wireless Networks", Bell Labs Technical Journal 7(2), p. 37-48, 2002, décrit une combinaison d'authentifications pour un terminal mobile qui dépend d'un réseau "domestique" de faible portée dont un serveur d'authentification contient une clé secrète également mémorisée préalablement dans le terminal mobile, lorsqu'il est en liaison avec un point d'accès relié au serveur d'authentification d'un autre réseau de faible portée dit réseau "étranger". Le serveur du réseau domestique authentifie à la fois le terminal mobile et le serveur du réseau étranger sur la base d'un premier "authentificateur" qui est calculé par le terminal mobile en fonction de la clé secrète, de nombres aléatoires fournis par le serveur du réseau étranger et le terminal et d'un identificateur du terminal. Le premier authentificateur est transmis au serveur du réseau domestique à travers le point d'accès et le serveur du réseau étranger. Le serveur du réseau domestique recalcule le premier authentificateur en fonction notamment de la clé secrète mémorisée retrouvée en correspondance à l'identificateur du terminal transmis par le serveur du réseau étranger.

Si le terminal est authentifié suite à une égalité des premiers authentificateurs transmis et recalculés indépendants de toute clé de session, le serveur du réseau domestique génère un deuxième "authentificateur" en fonction de la clé secrète, des nombres aléatoires et de l'identificateur du terminal et calcule une clé de session en fonction de la clé secrète, d'un troisième nombre aléatoire et du deuxième authentificateur. Le deuxième authentificateur est transmis au terminal à travers le serveur du réseau étranger et le point d'accès afin que le terminal recalcule le deuxième authentificateur et authentifie le serveur du réseau domestique lorsque les deuxièmes authentificateurs transmis et recalculés sont égaux. Après cette deuxième authentification indépendante de la clé de session, le terminal génère la clé de session.

Tous les paramètres précédents sont transmis à travers la liaison terminal mobile - point d'accès - serveur du réseau étranger - serveur du réseau domestique, sans aucune liaison à travers le réseau domestique entre le terminal mobile et le serveur du réseau domestique, ce qui impose de mémoriser préalablement la clé secrète dans le terminal mobile et le serveur du réseau domestique pour respecter une sécurisation des authentifications, tout en affaiblissant les authentifications par l'utilisation de la même clé secrète pour générer la clé de session de chaque session entre le terminal mobile et un point d'accès.

La demande de brevet WO 02/07135 A1 concerne l'activation d'une borne interactive reliée à un réseau de télécommunication depuis un terminal mobile dans un réseau de radiotéléphonie. Le terminal mobile signale sa présence au voisinage de la borne, notamment par transmission d'un message comprenant l'identificateur de terminal et un identificateur de zone de localisation du réseau de radiotéléphonie à un moyen de gestion qui invite l'usager du terminal à s'approcher de la borne la plus proche sur laquelle l'usager est authentifié au moyen d'un code secret lu dans une carte à mémoire, ou d'une empreinte biométrique de l'usager, transmis par la borne à un serveur. La demande de brevet WO 02/07135 A1 ne suggère aucune authentification mutuelle du terminal mobile et de la borne à travers le réseau de radiotéléphonie.

L'invention a pour objectif de sécuriser l'établissement d'une connexion entre un terminal mobile cellulaire et un point d'accès d'un réseau sans fil de faible portée sans nécessiter la saisie d'une clé secrète (code PIN), tout en assurant l'utilisation d'une telle clé qui peut être très longue et renouvelée à chaque session entre le terminal mobile et un point d'accès.

Pour atteindre cet objectif, un procédé d'authentification précédant une session entre un réseau sans fil de faible portée ayant des points d'accès et un terminal mobile dans un réseau de radiocommunications cellulaire, est caractérisé en ce qu'il comprend les étapes suivantes :
- transmission d'une requête incluant une adresse du terminal mobile et une adresse d'un point d'accès situé dans la zone de couverture du terminal mobile relative au réseau de faible portée, depuis le terminal mobile à un moyen de gestion via le réseau cellulaire,
- détermination d'un code secret par le moyen de gestion,
- depuis le moyen de gestion, transmission d'un message de confirmation incluant le code secret et l'adresse du point d'accès extraite de la requête au terminal mobile via le réseau cellulaire et d'un message de demande de connexion incluant le code secret et l'adresse du terminal mobile extraite de la requête au point d'accès,
- demande de connexion du terminal mobile au point d'accès désigné par l'adresse extraite du message de confirmation afin que le terminal mobile et le point d'accès déterminent une clé de session en fonction de l'adrese du point d'accès, de l'adresse du terminal mobile et du code secret extrait du message de confirmation et du message de demande de connexion, et
- authentification du terminal mobile par le point d'accès en fonction de la clé de session.

L'authentification peut comprendre une demande de détermination depuis le point d'accès d'une réponse en fonction de la clé de session au terminal mobile qui transmet la réponse au point d'accès, via le réseau de faible portée, et dans le point d'accès, une détermination d'une réponse en fonction de la clé de session et une comparaison des réponses pour autoriser l'ouverture d'une session entre le point d'accès et le terminal mobile lorsqu'au moins les réponses comparées sont identiques.

De préférence, l'authentification précédente du terminal mobile par le point d'accès est complétée par une authentification du point d'accès par le terminal mobile en fonction de la clé de session, lorsque le point d'accès a authentifié le terminal mobile. Dans ce cas, le procédé peut comprendre à la suite d'une identité des réponses comparées dans le point d'accès, une invitation transmise au terminal mobile afin que le terminal mobile authentifie le point d'accès en demandant au point d'accès de déterminer une deuxième réponse en fonction de la clé de session et de transmettre la deuxième réponse au terminal mobile via le réseau de faible portée, en déterminant une deuxième réponse en fonction de la clé de session et en comparant les deuxièmes réponses afin de n'autoriser l'ouverture de la session qu'après une identité des deuxièmes réponses comparées dans le terminal mobile.

En pratique, il est préférable que le terminal mobile recherche plusieurs points d'accès dans la zone de couverture du terminal mobile afin d'introduire des adresses des points d'accès trouvés dans la requête. Le moyen de gestion sélectionne alors l'adresse d'un point d'accès optimal parmi les adresses de point d'accès extraites de la requête selon un ou plusieurs critères prédéterminés pour introduire l'adresse du point d'accès optimal dans le message de confirmation transmis au terminal mobile et le message de demande de connexion transmis au point d'accès optimal.

Selon une variante, le moyen de gestion détermine la clé de session à la place des déterminations de la clé de session dans le terminal mobile et le point d'accès, et introduit la clé de session déterminée à la place du code secret dans le message de confirmation et le message de demande de connexion afin que lors de l'authentification les réponses à comparer soient déterminées notamment en fonction de la clé de session extraites des messages précédents.

L'invention concerne également un système d'authentification entre un réseau sans fil de faible portée ayant des points d'accès et un terminal mobile dans un réseau de radiocommunications cellulaire qui est caractérisé selon la revendication 14.

En variante, le moyen de gestion peut déterminer lui-même la clé de session et l'introduire à la place du code secret dans le message de confirmation et le message de demande de connexion.

D'autres caractéristiques et avantages de la présente invention apparaîtront plus clairement à la lecture de la description suivante de plusieurs réalisations préférées de l'invention, à titre d'exemples non limitatifs, en référence aux dessins annexés correspondants dans lesquels :
- la figure 1 est un bloc-diagramme schématique d'un système de télécommunications comprenant un terminal mobile dans un réseau de radiocommunications cellulaire et au moins un point d'accès dans un réseau sans fil de faible portée pour la mise en oeuvre du procédé d'authentification selon l'invention ; et
- la figure 2 montre des étapes principales d'un algorithme du procédé d'authentification entre le terminal mobile et le point d'accès selon l'invention.

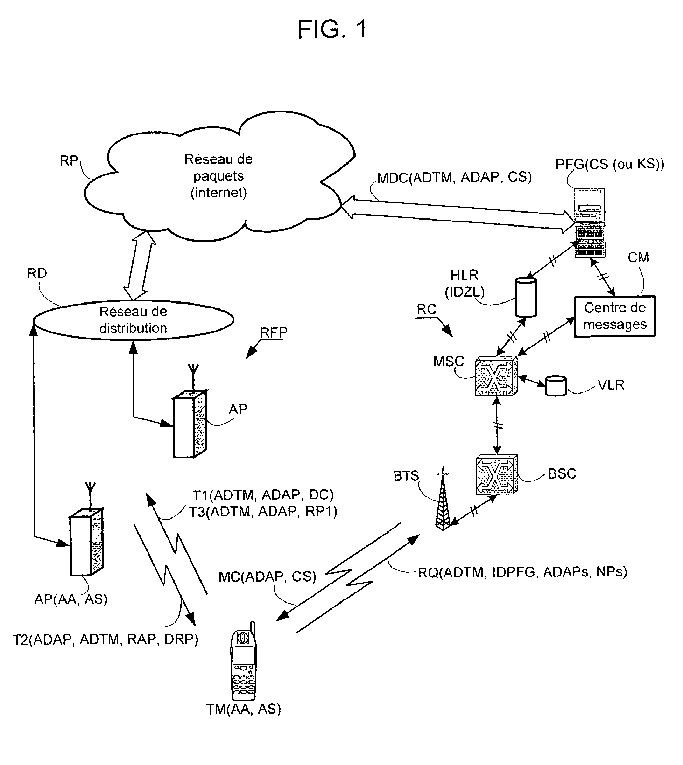

Le système de télécommunications montré à la figure 1 pour la mise en oeuvre du procédé d'authentification selon l'invention comprend essentiellement un terminal cellulaire mobile TM dans un réseau de radiocommunications cellulaire RC, un ou plusieurs points d'accès AP reliés par un réseau de distribution RD dans un réseau sans fil de faible portée RFP donnant accès à un réseau de paquets à haut débit RP, tel que l'internet, et une plateforme de gestion PFG propre à l'invention. A titre d'exemple, le réseau cellulaire RC est un réseau GSM et le réseau sans fil de faible portée RFP est un réseau Bluetooth.

Le terminal mobile TM comprend deux interfaces radio respectivement avec le réseau cellulaire RC et le réseau de faible portée RFP.

Les points d'accès AP et en variante les terminaux mobiles comprennent chacun un générateur pseudo-aléatoire et gèrent chacun un algorithme d'authentification AA pour produire des réponses RP1, RP2 chacune en fonction d'un nombre aléatoire, d'un code secret et de l'adresse de terminal mobile ou de point d'accès dans le réseau de faible portée RFP. Un algorithme de clé de session AS est également implémenté dans les points d'accès et le terminal mobile.

Le réseau cellulaire RC, tel qu'un réseau GSM, est représenté schématiquement dans la figure 1 par des moyens principaux auxquels le terminal mobile TM est rattaché temporairement, tels qu'une station de base BTS, un contrôleur de station de base BSC, un commutateur du service mobile MSC associé à un enregistreur de localisation des visiteurs VLR, et un enregistreur de localisation nominal HLR.

La plateforme de gestion PFG est reliée à l'enregistreur de localisation nominal HLR, soit directement comme un centre d'authentification (non représenté) lié à l'enregistreur HLR, soit en tant que serveur à travers un réseau intermédiaire tel que l'internet RP. La plateforme PFG peut être également reliée à un centre de messages courts SMSC (Short Message Service Center) lorsque des requêtes RQ lui sont transmises sous forme de messages courts par des terminaux mobiles, et/ou peut être reliée à un centre de message de signalisation USSD (Unstructured Supplementary Service Data) lorsque des requêtes RQ lui sont transmises sous la forme de messages USSD par des terminaux mobiles. Les messages USSD sont transmis au cours de véritables sessions établies et plus rapidement que des messages courts. Le centre de messages courts et le centre de messages de signalisation seront désignés ci-après indifféremment par "centre de messages CM". La plateforme PFG contient notamment un générateur pseudo-aléatoire pour générer des codes secrets CS à la demande de terminaux mobiles, tels que le terminal TM. Les codes secrets présentent selon l'invention, une grande longueur typiquement d'au moins seize octets, soit une longueur supérieure à 128 bits.

La plateforme PFG contient, selon des variantes de l'invention, une base de données listant les adresses ADAP des points d'accès AP de plusieurs réseaux sans fil de faible portée, en association avec les localisations géographiques des points d'accès AP par rapport à des zones de localisation déterminées ZL dans le réseau cellulaire RC. Il est rappelé qu'une zone de localisation dans un réseau cellulaire recouvre plusieurs cellules respectivement associées à des stations de base BTS et qu'un commutateur MSC gère une ou plusieurs zones de localisation.

Comme on le verra dans la suite, la plateforme PFG constitue un moyen de gestion intermédiaire entre un terminal mobile TM et un point d'accès AP afin de leur transmettre un code secret CS pour procéder à leur authentification. Selon des variantes décrites plus loin, la plateforme PFG sert également à sélectionner un point d'accès optimum en réponse à une requête RQ d'un terminal mobile.

Dans la figure 1 est représenté seulement un réseau sans fil de faible portée ; on comprendra que le terminal mobile TM peut communiquer avec tout réseau sans fil de faible portée particulièrement dans un lieu public, tel qu'une gare, une galerie marchande, un aérogare, un hôtel, etc. Un point d'accès radio AP est par exemple une borne dotée d'une interface radio Bluetooth pour pouvoir communiquer dans un rayon de quelques dizaines de mètres avec des terminaux mobiles TM, et d'une interface de ligne pour communiquer d'une part avec d'autres points d'accès AP à travers le réseau de distribution RD, s'il existe, du réseau sans fil de faible portée, d'autre part pour offrir des communications de paquets à haut débit aux terminaux mobiles grâce à une liaison du réseau de distribution RD à l'internet RP. Dans certaines configurations de réseau sans fil de faible portée, le réseau de distribution RD est un réseau intranet qui est relié directement par des lignes xDSL à l'internet RP, ou bien le réseau de distribution RD est confondu avec l'internet RP et chaque point d'accès AP est relié directement à l'internet RP à travers des lignes xDSL.

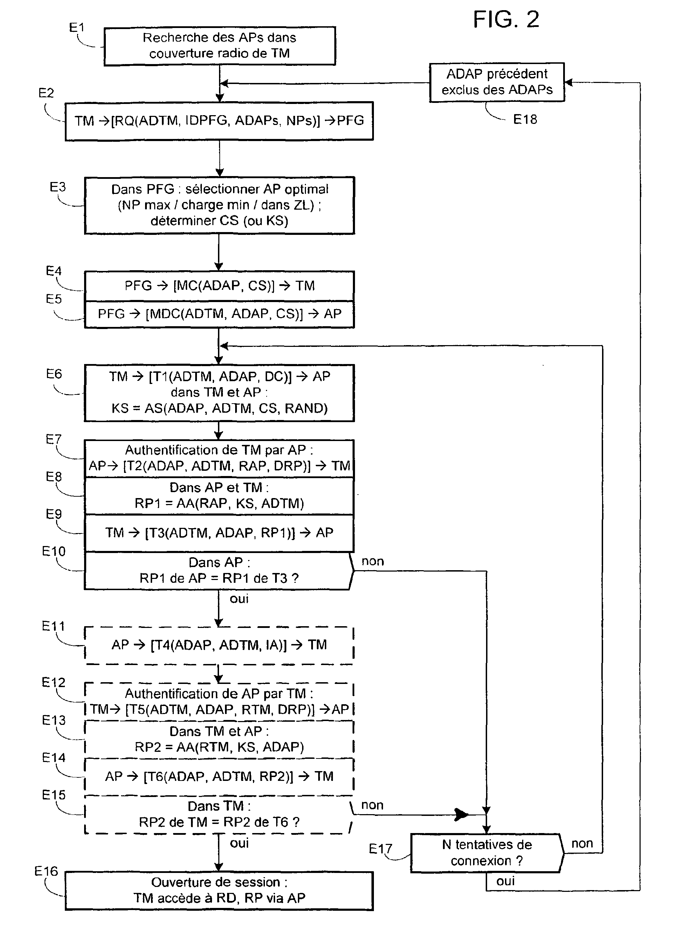

Comme montré à la figure 2, le procédé d'authentification selon une réalisation préférée de l'invention comprend essentiellement des étapes E1 à E17. Initialement, le terminal mobile TM a été mis en marche et reconnu par le réseau cellulaire RC dans une zone couverte radioélectriquement par celui-ci. Le terminal TM à l'état de veille est ainsi localisé dans une zone de localisation ZL du réseau RC et une identité temporaire TMSI lui a été attribuée par l'enregistreur VLR rattaché à cette zone de localisation, comme cela est connu.

A l'étape E1, l'usager du terminal TM qui pénètre dans la zone de couverture du réseau sans fil de faible portée RFP avec les points d'accès AP décide de sélectionner un menu Bluetooth sur son terminal TM, et particulièrement un sous-menu de recherche (inquiry mode) de points d'accès AP. Les points d'accès AP sous la forme de bornes peuvent être recherchées, c'est-à-dire scrutent chacun périodiquement la présence d'un terminal mobile afin de détecter une interrogation (inquiry) transmise par les terminaux mobiles. Par ce biais, le terminal mobile TM recueille les adresses ADAP des points d'accès situés dans la zone de couverture du terminal mobile TM relative au réseau de faible portée RFP. Le terminal TM trie parmi les réponses à sa recherche qu'il reçoit, les adresses des entités du réseau de faible portée RFP qui correspondent à des classes de dispositif associées aux points d'accès, afin d'écarter toute adresse provenant d'un dispositif quelconque équipé d'un module d'émission-réception compatible avec le réseau RFP, tel qu'un terminal téléphonique mobile, un assistant numérique personnel PDA, un ordinateur portable, etc.

A l'étape E2, les adresses ADAP des points d'accès disponibles et trouvés pendant la recherche précédente sont mémorisées dans le terminal TM et introduites dans une requête RQ à transmettre à la plateforme de gestion PFG à travers le réseau fixe du réseau cellulaire RC. La requête RQ comprend l'adresse ADTM du terminal TM prémémorisée dans celui-ci afin que la plateforme PFG puisse la communiquer aux points d'accès sélectionnés ultérieurement. La requête RQ comprend en tant qu'adresse de destinataire un identificateur IDPFG de la plateforme PFG qui a été prémémorisé dans le terminal mobile TM. La requête RQ peut être sous la forme d'un message court ou d'un message de signalisation USSD et la plateforme PFG est alors reliée au centre de messages correspondant CM.

La requête RQ ayant été émise automatiquement par le terminal TM et reçue par la plateforme PFG, la plateforme examine la liste des adresses de point d'accès ADAP extraite de la requête RQ afin de sélectionner le point d'accès optimal en fonction d'un ou plusieurs critères prédéterminés à l'étape E3. La sélection du point d'accès optimal est précédée par une vérification du profil de l'usager du terminal mobile TM identifié par son identificateur permanent IMSI afin de l'autoriser à accéder à un point d'accès du réseau sans fil de faible portée RFP.

Selon une première variante, un critère prédéterminé est relatif à une comparaison de niveaux de puissance de signaux de référence émis par les points d'accès trouvés par le terminal mobile TM, reçus par le terminal TM. Dans cette variante, le terminal TM inclut également, en association avec chaque adresse ADAP de point d'accès disponible et trouvé dans la requête transmise RQ, un niveau de puissance NP reçu dans le terminal. Le terminal transmet alors la requête RQ avec des couples ADAP, NP à la plateforme de gestion PFG qui compare les niveaux de puissance reçus NP afin de déterminer le plus grand niveau de puissance reçu et sélectionner le point d'accès AP associé au plus grand niveau de puissance reçu, en tant que point d'accès optimal, pour établir une connexion avec le terminal TM.

Selon une variante quelque peu similaire à la précédente, le point d'accès optimal ayant le plus grand niveau de puissance reçu par le terminal mobile est recherché et sélectionné à l'étape E1 parmi des points d'accès disponibles et trouvés dans la zone de couverture du terminal mobile TM, par le terminal mobile TM lui-même à la place de la plate-forme PFG. La requête RQ ne contient que l'adresse ADAP du point d'accès optimal AP à la place de la liste des couples ADAP, NP.

Selon une deuxième variante, un critère prédéterminé est relatif à une comparaison de charges de trafic des points d'accès AP disponibles et trouvés par le terminal mobile TM afin que la plateforme de gestion PFG sélectionne le point d'accès ayant la plus petite charge de trafic en tant que point d'accès optimal. Les charges de trafic des points d'accès AP du réseau de faible portée RFP sont recueillies par le réseau de distribution RD qui les communiquent périodiquement, via l'internet RP ou une ligne spécialisée, à la plateforme PFG pour une mise à jour de la base de données relatives aux points d'accès.

Selon une variante complémentaire à combiner avec la première ou deuxième variante précédente, la plateforme PFG interroge l'enregistreur de localisation nominal HLR du réseau cellulaire RC afin d'y lire l'identificateur IDZL de la zone de localisation où se trouve le terminal TM dans le réseau cellulaire, avant la sélection de l'adresse de point d'accès optimal. En fonction de l'identificateur de zone de localisation IDZL, la plateforme PFG élimine les adresses ADAP de la liste incluse dans la requête RQ, qui désignent des points d'accès disponibles et trouvés AP qui sont situés à l'extérieur de la zone de localisation incluant le terminal mobile TM et définie dans le réseau cellulaire. Cette variante complémentaire évite qu'un terminal mobile se substitue au point d'accès en se déclarant avec une adresse d'un point d'accès très éloigné du terminal mobile, afin de communiquer avec celui-ci. Puis le point d'accès optimal est sélectionné par la plateforme PFG soit en prenant simplement l'adresse du premier point d'accès de la liste extraite de la requête RQ, soit en combinant cette variante avec la variante des niveaux de puissance ou des charges de trafic des points d'accès afin de sélectionner le point d'accès présentant le plus grand niveau de puissance ou la plus petite charge de trafic parmi ceux situés dans la zone de localisation.

A l'étape E3, également le générateur pseudo-aléatoire dans la plateforme de gestion PFG détermine un code secret CS qui a une grande longueur, au moins égale à 128 bits.

La plateforme PFG prépare alors ensuite deux messages.

A l'étape E4, un message de confirmation MC contenant l'adresse ADAP du point d'accès optimal et le code secret produit CS est établi par la plateforme PFG pour le transmettre au terminal mobile TM à travers le réseau cellulaire RC. Le message MC est du même type que la requête RQ, c'est-à-dire un message court SM ou un message USSD, et transite à travers le centre de messages correspondant CM. Le code secret CS extrait du message MC est mémorisé en association avec l'adresse de point d'accès optimal ADAP dans le terminal mobile TM. Le terminal TM possède à l'étape E4 le code secret CS, comme si, selon la technique antérieure, l'usager avait saisi le code PIN au clavier du terminal.

En parallèle à l'étape E4, la plateforme PFG établit un message de demande de connexion MDC incluant l'adresse ADTM du terminal mobile TM, l'adresse ADAP du point d'accès optimal et le code secret généré CS à destination du point d'accès optimal AP dans le réseau sans fil de faible portée, à l'étape E5. Le message de demande de connexion MDC est sous la forme d'un paquet IP (Internet Protocol) qui transite à travers l'internet RP vers le réseau de distribution RD du réseau sans fil de faible portée RFP. Le code secret CS extrait du message MDC est mémorisé en association avec l'adresse ADTM dans le point d'accès optimal AP.

En réponse à l'adresse ADAP du point d'accès optimal AP extrait du message de confirmation MC reçu par le terminal mobile TM, celui-ci tente de se connecter au point d'accès optimal AP ainsi identifié en invitant le point d'accès optimal à l'authentifier. A l'étape E6, le terminal mobile TM émet une première trame T1 contenant l'adresse de terminal ADTM, l'adresse ADAP du point d'accès optimal et un indicateur de demande de connexion et de détermination de clé de session DC.

Le point d'accès optimal en mode de recherche périodique reconnaît que la trame T1 lui est destinée. Le terminal mobile et le point d'accès déterminent alors chacun une clé de session commune KS en appliquant à l'algorithme de clé de session AS l'adresse du terminal mobile ADTM, l'adresse ADAP du point d'accès, le code secret CS et un ou plusieurs nombres aléatoires RAND échangés entre eux à travers le réseau de faible portée RFP. Le code secret CS utilisé dans le terminal mobile est celui extrait dans le message de confirmation MC, tandis que le code secret CS utilisé dans le point d'accès AP est celui extrait du message de demande de connexion MDC. Le terminal mobile TM et le point d'accès optimal AP sont ainsi appairés. La clé de session KS est mémorisée dans le terminal et le point d'accès, et n'est utilisée, notamment pour l'authentification et un chiffrement de données, que jusqu'à la déconnexion du point d'accès AP et du terminal mobile TM.

L'authentification du terminal mobile TM est ensuite déclenchée par le point d'accès optimal en émettant en réponse à la première trame T1, une trame T2 incluant l'adresse de point d'accès optimal ADAP, l'adresse ADTM du terminal TM, un nombre aléatoire RAP généré par le générateur pseudo-aléatoire dans le point d'accès et un indicateur de demande de réponse DRP vers le terminal mobile TM, à l'étape E7.

Le procédé passe ensuite à des étapes E8, E9 et E10 relatives à une authentification proprement dite du terminal mobile TM par le point d'accès optimal AP. A réception de la trame T2 avec l'indicateur de demande de réponse, à l'étape E8 le terminal mobile TM applique le nombre aléatoire RAP extrait de la trame T2, la clé de session KS déterminée à l'étape E6 et son adresse ADTM à l'algorithme d'authentification AA qui produit une réponse RP1. Egalement à l'étape E8, le point d'accès optimal AP exécute une application analogue : RP1 = AA (RAP, KS, ADTM), mais dans laquelle la clé de session est celle qu'il a déterminée à l'étape E6 et associée à l'adresse ADTM. Puis le terminal mobile émet, à l'étape E9, une trame T3 incluant, outre les adresses ADTM et ADAP, la réponse RP1 = AA (RAP, KS, ADTM) qui a été déterminée dans le terminal mobile. La trame T3 est reconnue par le point d'accès optimal AP qui à l'étape E10 compare la réponse RP1 déterminée dans le point d'accès optimal à la réponse RP1 extraite de la trame reçue T3. Si les réponses RP1 comparées sont identiques, le point d'accès optimal AP autorise l'ouverture d'une session à travers celui-ci depuis le terminal mobile TM vers le réseau de distribution RD et l'internet RP, à l'étape E16.

La clé de session KS pour cette session ouverte sera utilisée pour déterminer la clé de session d'une session suivante entre le terminal mobile TM et le point d'accès AP si la clé de session KS n'a pas été entre temps effacée à l'expiration d'une durée à compter de la mémorisation de la clé KS, prédéterminée par l'opérateur gérant le point d'accès.

Selon une variante plus complète relative à une authentification mutuelle, lorsque le point d'accès optimal AP a authentifié le terminal mobile TM à l'étape E10, le point d'accès optimal AP émet à l'étape E11 une trame T4 contenant les adresses ADAP et ADTM et un indicateur IA pour inviter le terminal TM à l'authentifier.

En réponse à la trame précédente T4, le terminal mobile TM déclenche l'authentification du point d'accès optimal en émettant une trame T5 destinée au point d'accès optimal d'adresse ADAP. La trame T5 inclut un nombre aléatoire RTM généré par le générateur pseudo-aléatoire dans le terminal mobile et un indicateur de demande de réponse DRP, à l'étape E12. A la suite de la trame T5, à l'étape E13 le point d'accès AP applique le nombre aléatoire RTM extrait de la trame T5, la clé de session KS déterminée à l'étape E6 et son adresse ADAP à l'algorithme d'authentification AA qui produit une deuxième réponse RP2. Egalement à l'étape E13, le terminal mobile TM exécute une application : RP2 = AA (RTM, KS, ADAP), mais dans laquelle la clé de session est celle qu'il a déterminée à l'étape E6 et associée à l'adresse ADAP. Puis le point d'accès optimal AP émet une trame T6 incluant, outre les adresses ADAP et ADTM, la réponse RP2 = AA (RTM, KS, ADAP) qui a été déterminée dans le point d'accès optimal. La trame T6 est reconnue par le terminal mobile TM qui à l'étape E15 compare la réponse RP2 déterminée dans le terminal mobile à la réponse RP2 extraite de la trame reçue T6. Si les réponses RP2 comparées sont identiques, le terminal TM confirme par l'émission d'une autre trame l'ouverture de la session demandée au point d'accès optimal AP à l'étape E16.

En variante, la clé de session KS n'est pas déterminée séparément par le terminal mobile TM et le point d'accès optimal AP à l'étape E6 mais est déterminée préalablement par la plateforme de gestion PFG, à l'étape E3. La plateforme génère d'une manière aléatoire une clé de session KS de même taille que celle selon la réalisation décrite précédemment.

Cependant, afin d'assurer une cohérence, la plateforme peut contenir l'algorithme de clé de session AS. A la fin de l'étape E3, la plateforme a sélectionné le point d'accès optimal et a associé l'adresse ADAP du point d'accès optimal à l'adresse ADTM du terminal mobile extraite de la requête RQ, ce qui lui permet de déterminer la clé de session en appliquant les adresses ADAP et ADTM, le code secret CS et un ou plusieurs nombres aléatoires RAND à l'algorithme AS, soit :
KS = AS (ADAP, ADTM, CS, RAND).

Aux étapes E4 et E5, la plateforme de gestion PFG introduit la clé de session déterminée KS à la place du code secret CS dans le message de confirmation MC transmis au terminal mobile et dans le message de demande de connexion MDC transmis au point d'accès optimal pour que le point d'accès optimal et le terminal mobile utilisent la clé de session KS pour l'authentification E6 à E10 ou E6 à E15 et après la session ouverte à l'étape E16, l'étape E6 ne comportant plus de détermination de clé de session KS.

Comme indiqué à l'étape E17, si l'authentification du terminal mobile par le point d'accès optimal a échoué, c'est-à-dire si les réponses RP1 comparées à l'étape E10 sont différentes, ou si l'authentification mutuelle a échoué, c'est-à-dire si les réponses RP2 comparées à l'étape E15 sont différentes, une tentative de demande d'ouverture de session est réitérée en procédant à l'exécution des étapes E6 à E10 selon la réalisation à authentification du terminal par le point d'accès optimal, ou des étapes E6 à E15 selon la variante à authentification mutuelle.

En pratique, les étapes de demande de connexion, de détermination de réponses et de comparaison de réponses E6 à E10 ou E6 à E15 peuvent être réitérées au maximum N fois tant que les réponses comparées RP1 ou RP2 sont différentes, N étant un nombre prédéterminé d'itérations par exemple égal à 3.

Si après N itérations de demande de connexion à l'étape E17, l'authentification a échoué, c'est-à-dire les réponses comparées sont encore différentes, le procédé peut revenir automatiquement à l'étape E2 afin d'exécuter les étapes suivantes E3 à E17 relativement à l'adresse ADAP d'un autre point d'accès sélectionné selon les critères prédéterminés, par exemple parmi la liste incluse dans la requête RQ, comme indiqué à une étape intermédiaire E18. La sélection de cet autre point d'accès dans la liste exclut naturellement le dernier point d'accès optimal qui a été précédemment sélectionné et pour lequel N tentatives de connexion ont échoué. L'autre point d'accès optimal sélectionné est situé dans la zone de couverture du terminal mobile TM relative au réseau de faible portée RFP et peut être le point d'accès présentant le plus grand niveau de puissance reçu ou la plus petite charge de trafic dans la liste restante, ou celui qui succède au dernier point d'accès optimal sélectionné dans la liste.

Bien que l'invention ait été décrite pour un réseau cellulaire du type GSM et un réseau sans fil de faible portée du type Bluetooth, l'invention est également applicable dans le contexte d'un réseau de radiocommunications pour mobiles du type UMTS ou plus généralement du type troisième génération, et à d'autres réseaux sans fil de faible portée par exemple du type selon la norme IEEE 802.11b et selon les autres normes suivantes à celle-ci, c'est-à-dire pour des réseaux également dits réseaux Wi-Fi (Wireless Fidelity).

## Revendications

1. Procédé d'authentification entre un réseau sans fil de faible portée (RFP) ayant des points d'accès et un terminal mobile (TM) dans un réseau de radiocommunications cellulaire (RC), **caractérisé en ce qu'**il comprend les étapes suivantes :
- transmission (E2) d'une requête (RQ) incluant une adresse (ADTM) du terminal mobile et une adresse (ADAP) d'un point d'accès (AP) situé dans la zone de couverture du terminal mobile (TM) relative au réseau de faible portée, depuis le terminal mobile à un moyen de gestion (PFG) via le réseau cellulaire (RC),
- détermination (E3) d'un code secret (CS) par le moyen de gestion,
- depuis le moyen de gestion (PFG), transmission (E4, E5) d'un message de confirmation (MC) incluant le code secret et l'adresse du point d'accès extraite de la requête au terminal mobile via le réseau cellulaire et d'un message de demande de connexion (MDC) incluant le code secret et l'adresse du terminal mobile extraite de la requête au point d'accès (AP),
- demande (E6) de connexion du terminal mobile au point d'accès désigné par l'adresse (ADAP) extraite du message de confirmation (MC) afin que le terminal mobile (TM) et le point d'accès (AP) déterminent une clé de session (KS) en fonction de l'adresse (ADAP) du point d'accès, de l'adresse (ADTM) du terminal mobile et du code secret (CS) extrait du message de confirmation (MC) et du message de demande de connexion (MDC), et
- authentification (E7-E10) du terminal mobile (TM) par le point d'accès (AP) en fonction de la clé de session (KS).

2. Procédé conforme à la revendication 1, selon lequel l'authentification du terminal mobile par le point d'accès comprend une demande (E7) de détermination (E8) depuis le point d'accès d'une réponse (RP1) en fonction de la clé de session (KS) au terminal mobile qui transmet (E9) la réponse au point d'accès, via le réseau de faible portée, et dans le point d'accès (AP), une détermination (E8) d'une réponse (RP1) en fonction de la clé de session (KS) et une comparaison (E10) des réponses pour autoriser (E16) l'ouverture d'une session entre le point d'accès et le terminal mobile lorsqu'au moins les réponses comparées sont identiques.

3. Procédé conforme à la revendication 1 ou 2, comprenant une authentification (E11-E15) du point d'accès (AP) par le terminal mobile (TM) en fonction de la clé de session (KS), lorsque le point d'accès a authentifié le terminal mobile.

4. Procédé conforme à la revendication 3, selon lequel l'authentification du point d'accès par le terminal mobile comprend une invitation (E11) du point d'accès transmise au terminal mobile (TM) afin que le terminal mobile authentifie le point d'accès en demandant (E12) au point d'accès de déterminer (E13) une deuxième réponse (RP2) en fonction de la clé de session (KS) et de transmettre (E14) la deuxième réponse au terminal mobile via le réseau de faible portée (RFP), en déterminant (E13) une deuxième réponse (RP2) en fonction de la clé de session (KS), et en comparant (E15) les deuxièmes réponses (RP2) afin de n'autoriser l'ouverture de la session qu'après une identité des deuxièmes réponses comparées dans le terminal mobile.

5. Procédé conforme à l'une quelconque des revendications 1 à 4, comprenant au maximum un nombre prédéterminé d'itérations (E17) des étapes de demande de connexion et d'authentification (E6-E10;E6-E15) tant que l'authentification a échoué.

6. Procédé conforme à la revendication 5, comprenant une itération (E18) des étapes (E2-E17) énoncées dans la revendication 1 relativement à un autre point d'accès (AP) dans la zone de couverture du terminal mobile (TM) lorsque l'authentification a échoué (E17) un nombre prédéterminé de fois.

7. Procédé conforme à l'une quelconque des revendications 1 à 6, comprenant dans le terminal mobile (TM) une recherche (E1) d'un point d'accès optimal (AP) ayant le plus grand niveau de puissance reçu par le terminal mobile parmi des points d'accès dans la zone de couverture du terminal mobile afin que le terminal mobile (TM) introduise l'adresse (ADAP) du point d'accès optimal dans la requête (RQ).

8. Procédé conforme à l'une quelconque des revendications 1 à 6, comprenant dans le terminal mobile (TM) une recherche (E1) de points d'accès dans la zone de couverture du terminal mobile afin d'introduire des adresses (ADAP) des points d'accès trouvés dans la requête (RQ), et dans le moyen de gestion (PFG) une sélection (E3) de l'adresse (ADAP) d'un point d'accès optimal (AP) parmi les adresses de point d'accès extraites de la requête (RQ) selon un critère prédéterminé pour introduire l'adresse du point d'accès optimal dans le message de confirmation (MC) transmis au terminal mobile et le message de demande de connexion (MDC) transmis au point d'accès optimal (AP).

9. Procédé conforme à la revendication 8, selon lequel le critère prédéterminé est relatif à une comparaison de niveaux de puissance (NP) des points d'accès trouvés (AP) reçus par le terminal mobile (TM) et transmis en association avec les adresses (ADAP) des points d'accès trouvés dans la requête (RQ) afin que le moyen de gestion (PFG) détermine le point d'accès ayant le plus grand niveau de puissance reçu en tant que point d'accès optimal.

10. Procédé conforme à la revendication 8 ou 9, selon lequel le critère prédéterminé est relatif à une comparaison de charges de trafic des points d'accès (AP) trouvés (E1) par le terminal mobile (TM) afin que le moyen de gestion (PFG) sélectionne le point d'accès ayant la plus petite charge en tant que point d'accès optimal.

11. Procédé conforme à l'une quelconque des revendications 8 à 10, selon lequel le critère prédéterminé est relatif en outre à une élimination des adresses (ADAP) des points d'accès trouvés (AP) qui sont situés à l'extérieur d'une zone de localisation incluant le terminal mobile (TM) et définie dans le réseau cellulaire (RC), avant la sélection de l'adresse du point d'accès optimal.

12. Procédé conforme à l'une quelconque des revendications 1 à 11, **caractérisé en ce que** le code secret (CS) déterminé par le moyen de gestion (PFG) est généré pseudo-aléatoirement et a une longueur supérieure à 16 octets.

13. Procédé conforme à l'une quelconque des revendications 1 à 12, comprenant dans le moyen de gestion (PFG) une détermination (E3) de la clé de session (KS) à la place des déterminations (E6) de la clé de session dans le terminal mobile (TM) et le point d'accès (AP), et une introduction (E4, E5) de la clé de session déterminée (KS) à la place du code secret dans le message de confirmation (MC) et le message de demande de connexion (MDC).

14. Système d'authentification entre un réseau sans fil de faible portée (RFP) ayant des points d'accès et un terminal mobile (TM) dans un réseau de radiocommunications cellulaire (RC), **caractérisé en ce qu**'il comprend :
un moyen de gestion (PFG) pour déterminer un code secret (CS)- en réponse à une requête (RQ) qui inclut l'adresse (ADTM) du terminal mobile et l'adresse (ADAP) d'un point d'accès (AP) situé dans la zone de couverture du terminal mobile (TM) relative au réseau de faible portée et qui est transmise depuis le terminal mobile via le réseau cellulaire (RC), et pour transmettre un message de confirmation (MC) incluant le code secret et l'adresse du point d'accès extraite de la requête (RQ) au terminal mobile (TM) via le réseau cellulaire (RC) et un message de demande de connexion (MDC) incluant le code secret et l'adresse (ADTM) du terminal mobile extraite de la requête au point d'accès (AP),
le terminal mobile pour demander une connexion au point d'accès (AP) désigné par l'adresse (ADAP) extraite du message de confirmation (MC) et pour déterminer une clé de session (KS) en fonction de l'adresse (ADAP) du point d'accès, de l'adresse (ADTM) du terminal mobile et du code secret (CS) extrait du message de confirmation (MC) , et
le point d'accès (AP) pour déterminer la clé de session (KS) en fonction de l'adresse (ADAP) du point d'accès, de l'adresse (ADTM) du terminal mobile et du code secret (CS) extrait du message de demande de connexion (MDC) et pour authentifier le terminal mobile en fonction de la clé de session (KS).

15. Système conforme à la revendication 14, **caractérisé en ce que** le moyen de gestion détermine lui-même la clé de session et l'introduit à la place du code secret dans le message de confirmation (MC) et le message de demande de connexion (MDC).

## Claims

1. Method of authentication between a short-range wireless network (RFP) having access points and a mobile terminal (TM) in a cellular radiocommunications network (RC), **characterized in that** it comprises the following steps:
- transmission (E2) of a query (RQ) including an address (ADTM) of the mobile terminal and an address (ADAP) of an access point (AP) situated in the coverage zone of the mobile terminal (TM) which relates to the short-range network, from the mobile terminal to a management means (PFG) via the cellular network (RC),
- determination (E3) of a secret code (CS) by the management means,
- from the management means (PFG), transmission (E4, E5) of a confirmation message (MC) including the secret code and the access point address extracted from the query to the mobile terminal via the cellular network and of a connection request message (MDC) including the secret code and the mobile terminal address extracted from the query to the access point (AP),
- connection request (E6) of the mobile terminal to the access point designated by the address (ADAP) extracted from the confirmation message (MC) such as the mobile terminal (TM) and the access point (AP) determine a session key (KS) as a function of the access point address (ADAP), of the mobile terminal address (ADTM) and of the secret code (CS) extracted from the confirmation message (MC) and the connection request message (MDC), and
- authentication (E7-E10) of the mobile terminal (TM) by the access point (AP) as a function of the session key (KS).

2. Method in accordance with Claim 1, according to which the authentication of the mobile terminal by the access point comprises a request (E7) for determination (E8) from the access point of a response (RP1) as a function of the session key (KS) to the mobile terminal which transmits (E9) the response to the access point, via the short-range network, and in the access point (AP), a determination (E8) of a response (RP1) as a function of the session key (KS) and a comparison (E10) of the responses so as to authorize (E16) the opening of a session between the access point and the mobile terminal when at least the responses compared are identical.

3. Method in accordance with Claim 1 or 2, comprising an authentication (E11-E15) of the access point (AP) by the mobile terminal (TM) as a function of the session key (KS), when the access point has authenticated the mobile terminal.

4. Method in accordance with Claim 3, according to which the authentication of the access point by the mobile terminal comprises an access point invitation (E11) transmitted to the mobile terminal (TM) so that the mobile terminal authenticates the access point by requesting (E12) the access point to determine (E13) a second response (RP2) as a function of the session key (KS) and to transmit (E14) the second response to the mobile terminal via the short-range network (RFP), by determining (E13) a second response (RP2) as a function of the session key (KS), and by comparing (E15) the two responses (RP2) so as to authorize the opening of the session only after an identity of the second responses compared in the mobile terminal.

5. Method in accordance with any one of Claims 1 to 4, comprising at most a predetermined number of iterations (E17) of the steps of requesting connection and authentication (E6-10; E6-E15) so long as authentication has failed.

6. Method in accordance with Claim 5, comprising an iteration (E18) of steps (E2-E17) stated in Claim 1 in relation to another access point (AP) in the coverage zone of the mobile terminal (TM) when the authentication has failed (E17) a predetermined number of times.

7. Method in accordance with any one of Claims 1 to 6, comprising in the mobile terminal (TM) a search (E1) for an optimal access point (AP) having the greatest power level received by the mobile terminal from among the access points in the coverage zone of the mobile terminal so that the mobile terminal (TM) introduces the address (ADAP) of the optimal access point into the query (RQ).

8. Method in accordance with any one of Claims 1 to 6, comprising in the mobile terminal (TM) a search (E1) for access points in the coverage zone of the mobile terminal so as to introduce addresses (ADAP) of the access points found in the query (RQ), and in the means of management (PFG) a selection (E3) of the address (ADAP) of an optimal access point (AP) from among the access point addresses extracted from the query (RQ) according to a predetermined criterion so as to introduce the address of the optimal access point into the confirmation message (MC) transmitted to the mobile terminal and the connection request message (MDC) transmitted to the optimal access point (AP).

9. Method in accordance with Claim 8, according to which the predetermined criterion relates to a comparison of power levels (NP) of the access points found (AP) received by the mobile terminal (TM) and transmitted in association with the addresses (ADAP) of the access points found in the query (RQ) so that the means of management (PFG) determines the access point having the greatest power level received as optimal access point.

10. Method in accordance with Claim 8 or 9, according to which the predetermined criterion relates to a comparison of traffic loadings of the access points (AP) found (E1) via the mobile terminal (TM) so that the means of management (PFG) selects the access point having the smallest loading as optimal access point.

11. Method in accordance with any one of claims 8 to 10, according to which the predetermined criterion relates furthermore to an elimination of the addresses (ADAP) of the access points found (AP) which are situated outside a zone of location including the mobile terminal (TM) and defined in the cellular network (RC), before the selection of the address of the optimal access point.

12. Method in accordance with any one of Claims 1 to 11, **characterized in that** the secret code (CS) determined by the means of management (PFG) is generated psuedo-randomly and has a length of greater than 16 bytes.

13. Method in accordance with any one of Claims 1 to 12, comprising in the means of management (PFG) a determination (E3) of the session key (KS) instead of the determinations (E6) of the session key in the mobile terminal (TM) and the access point (AP), and an introduction (E4, E5) of the session key determined (KS) instead of the secret code into the confirmation message (MC) and the connection request message (MDC).

14. Authentication system between a short-range wireless network (RFP) having access points and a mobile terminal (TM) in a cellular radiocommunications network (RC), **characterized in that** it comprises:
a management means(PFG) for determining a secret code (CS) in response to a query (RQ) which includes the mobile terminal address (ADTM) and the address (ADAP) of an access point (AP) situated in the coverage zone of the mobile terminal (TM) which relates to the short-range network and which is transmitted from the mobile terminal via the cellular network (RC), and for transmitting a confirmation message (MC) including the secret code and the access point address extracted from the query (RQ) to the mobile terminal (TM) via the cellular network (RC) and a connection request message (MDC) including the secret code and the mobile terminal address (ADTM) extracted from the query to the access point (AP),
the mobile terminal for requesting a connection to the access point (AP) designated by the address (ADAP) extracted from the confirmation message (MC), and for determining a session key (KS) as a function of the address (ADAP), of the mobile terminal access point address (ADTM) and of the secret code (CS) extracted from the confirmation message (MC), and
the access point (AP) for determining the session key (KS) as a function of the access point address (ADAP), of the mobile terminal address (ADTM) and of the secret code (CS) extracted from the connection request message (MDC) and for authenticating the mobile terminal as a function of the session key (KS).

15. System in accordance with Claim 14, **characterized in that** the means of management itself determines the session key and introduces it instead of the secret code into the confirmation message (MC) and the connection request message (MDC).

## Patentansprüche

1. Authentifizierungsverfahren zwischen einem drahtlosen Netz geringer Reichweite (RFP) mit Zugriffspunkten und einer Mobilstation (TM) in einem zellularen Funkverkehrsnetz (RC), **dadurch gekennzeichnet, dass** es die folgenden Schritte aufweist:
- Übertragung (E2) einer Anfrage (RQ), die eine Adresse (ADTM) der Mobilstation und eine Adresse (ADAP) eines Zugriffspunkts (AP) enthält, der sich im Versorgungsgebiet der Mobilstation (TM) bezüglich des Netzes geringer Reichweite befindet, von der Mobilstation über das zellulare Netz (RC) zu einer Verwaltungseinrichtung (PFG),
- Bestimmung (E3) eines Geheimcodes (CS) durch die Verwaltungseinrichtung,
- ausgehend von der Verwaltungseinrichtung (PFG), Übertragung (E4, E5) einer Bestätigungsmitteilung (MC), die den Geheimcode und die aus der Anfrage entnommene Adresse des Zugriffspunkts enthält, an die Mobilstation über das zellulare Netz, und einer Verbindungsanforderungsmitteilung (MDC), die den Geheimcode und die aus der Anfrage entnommene Adresse der Mobilstation enthält, an den Zugriffspunkt (AP),
- Anforderung (E6) einer Verbindung von der Mobilstation zu dem von der aus der Bestätigungsmitteilung (MC) entnommenen Adresse (ADAP) bezeichneten Zugriffspunkt, damit die Mobilstation (TM) und der Zugriffspunkt (AP) in Abhängigkeit von der Adresse (ADAP) des Zugriffspunkts, der Adresse (ADTM) der Mobilstation und vom aus der Bestätigungsmitteilung (MC) und aus der Verbindungsanforderungsmitteilung (MDC) entnommenen Geheimcode (CS) einen Sitzungsschlüssel (KS) bestimmen, und
- Authentifizierung (E7-E10) der Mobilstation (TM) durch den Zugriffspunkt (AP) in Abhängigkeit vom Sitzungsschlüssel (KS).

2. Verfahren nach Anspruch 1, gemäß dem die Authentifizierung der Mobilstation durch den Zugriffspunkt ausgehend vom Zugriffspunkt eine Anforderung (E7) der Bestimmung (E8) einer Antwort (RP1) in Abhängigkeit vom Sitzungsschlüssel (KS) an die Mobilstation, die die Antwort über das Netz geringer Reichweite an den Zugriffspunkt überträgt (E9), und im Zugriffspunkt (AP) eine Bestimmung (E8) einer Antwort (RP1) in Abhängigkeit vom Sitzungsschlüssel (KS) und einen Vergleich (E10) der Antworten enthält, um die Eröffnung einer Sitzung zwischen dem Zugriffspunkt und der Mobilstation zu erlauben (E16), wenn mindestens die verglichenen Antworten gleich sind.

3. Verfahren nach Anspruch 1 oder 2, das eine Authentifizierung (E11-E15) des Zugriffspunkts (AP) durch die Mobilstation (TM) in Abhängigkeit vom Sitzungsschlüssel (KS) aufweist, wenn der Zugriffspunkt die Mobilstation authentifiziert hat.

4. Verfahren nach Anspruch 3, gemäß dem die Authentifizierung des Zugriffspunkts durch die Mobilstation eine Aufforderung (E11) durch den Zugriffspunkt enthält, die an die Mobilstation (TM) übertragen wird, damit die Mobilstation den Zugriffspunkt authentifiziert, indem sie vom Zugriffspunkt fordert (E12), eine zweite Antwort (RP2) in Abhängigkeit vom Sitzungsschlüssel (KS) zu bestimmen (E13) und die zweite Antwort über das Netz geringer Reichweite (RFP) an die Mobilstation zu übertragen (E14), indem sie eine zweite Antwort (RP2) in Abhängigkeit vom Sitzungsschlüssel (KS) bestimmt (E13), und indem sie die zweiten Antworten (RP2) vergleicht (E15), damit die Eröffnung der Sitzung erst nach einer Identität der in der Mobilstation verglichenen zweiten Antworten erlaubt wird.

5. Verfahren nach einem der Ansprüche 1 bis 4, das maximal eine vorbestimmte Anzahl von Iterationen (E17) der Schritte der Verbindungsanforderung und der Authentifizierung (E6-E10; E6-E15) aufweist, solange die Authentifizierung fehlgeschlagen ist.

6. Verfahren nach Anspruch 5, das eine Iteration (E18) der in Anspruch 1 aufgezählten Schritte (E2-E17) bezüglich eines anderen Zugriffspunkts (AP) im Versorgungsgebiet der Mobilstation (TM) enthält, wenn die Authentifizierung eine vorbestimmte Anzahl von Malen fehlgeschlagen ist (E17).

7. Verfahren nach einem der Ansprüche 1 bis 6, das in der Mobilstation (TM) eine Suche (E1) nach einem optimalen Zugriffspunkt (AP) mit dem größten Leistungspegel enthält, der von der Mobilstation unter Zugriffspunkten im Versorgungsgebiet der Mobilstation empfangen wird, damit die Mobilstation (TM) die Adresse (ADAP) des optimalen Zugriffspunkts in die Anfrage (RQ) einfügt.

8. Verfahren nach einem der Ansprüche 1 bis 6, das in der Mobilstation (TM) eine Suche (E1) nach Zugriffspunkten im Versorgungsgebiet der Mobilstation, um Adressen (ADAP) der gefundenen Zugriffspunkte in die Anfrage (RQ) einzufügen, und in der Verwaltungseinrichtung (PFG) eine Auswahl (E3) der Adresse (ADAP) eines optimalen Zugriffspunkts (AP) unter den Zugriffspunktadressen aufweist, die aus der Anfrage (RQ) gemäß einem vorbestimmten Kriterium entnommen wurden, um die Adresse des optimalen Zugriffspunkts in die Bestätigungsmitteilung (MC), die an die Mobilstation übertragen wird, und in die Verbindungsanforderungsmitteilung (MDC) einzufügen, die an den optimalen Zugriffspunkt (AP) übertragen wird.

9. Verfahren nach Anspruch 8, gemäß dem das vorbestimmte Kriterium sich auf einen Leistungspegelvergleich (NP) der gefundenen Zugriffspunkte (AP) bezieht, die von der Mobilstation (TM) empfangen und zusammen mit den Adressen (ADAP) der in der Anfrage (RQ) gefundenen Zugriffspunkte übertragen werden, damit die Verwaltungseinrichtung (PFG) den empfangenen Zugriffspunkt mit dem größten Leistungspegel als optimalen Zugriffspunkt bestimmt.

10. Verfahren nach Anspruch 8 oder 9, gemäß dem das vorbestimmte Kriterium sich auf einen Vergleich von Verkehrslasten der von der Mobilstation (TM) gefundenen (E1) Zugriffspunkte (AP) bezieht, damit die Verwaltungseinrichtung (PFG) den Zugriffspunkt mit der geringsten Last als optimalen Zugriffspunkt wählt.

11. Verfahren nach einem der Ansprüche 8 bis 10, gemäß dem das vorbestimmte Kriterium sich außerdem auf eine Unterdrückung der Adressen (ADAP) der gefundenen Zugriffspunkte (AP), die sich außerhalb eines die Mobilstation (TM) einschließenden und im zellularen Netz (RC) definierten Lokalisierungsbereichs befinden, vor der Auswahl der Adresse des optimalen Zugriffspunkts bezieht.

12. Verfahren nach einem der Ansprüche 1 bis 11,
**dadurch gekennzeichnet, dass** der von der Verwaltungseinrichtung (PFG) bestimmte Geheimcode (CS) pseudozufällig erzeugt wird und eine Länge von mehr als 16 Bytes hat.

13. Verfahren nach einem der Ansprüche 1 bis 12, das in der Verwaltungseinrichtung (PFG) eine Bestimmung (E3) des Sitzungsschlüssels (KS) anstelle der Bestimmungen (E6) des Sitzungsschlüssels in der Mobilstation (TM) und im Zugriffspunkt (AP), und eine Einführung (E4, E5) des bestimmten Sitzungsschlüssels (KS) anstelle des Geheimcodes in die Bestätigungsmitteilung (MC) und die Verbindungsanforderungsmitteilung (MDC) aufweist.

14. Authentifizierungssystem zwischen einem drahtlosen Netz geringer Reichweite (RDFP) mit Zugriffspunkten und einer Mobilstation (TM) in einem zellularen Funkverkehrsnetz (RC), **dadurch gekennzeichnet, dass** es aufweist:
eine Verwaltungseinrichtung (PFG), um einen Geheimschlüssel (CS) als Antwort auf eine Anfrage (RQ) zu bestimmen, die die Adresse (ADTM) der Mobilstation und die Adresse (ADAP) eines Zugriffspunkts (AP) enthält, der sich im Versorgungsgebiet der Mobilstation (TM) bezüglich des Netzes geringer Reichweite befindet, und die von der Mobilstation über das zellulare Netz (RC) übertragen wird, um eine Bestätigungsmitteilung (MC), die den Geheimschlüssel und die aus der Anfrage (RQ) entnommene Adresse des Zugriffspunkts enthält, über das zellulare Netz (RC) an die Mobilstation (TM), und eine Verbindungsanforderungsmitteilung (MDC), die den Geheimcode und die aus der Anfrage entnommene Adresse (ADTM) der Mobilstation enthält, an den Zugriffspunkt (AP) zu übertragen,
die Mobilstation, um eine Verbindung mit dem von der aus der Bestätigungsmitteilung (MC) entnommenen Adresse (ADAP) bezeichneten Zugriffspunkt (AP) anzufordern, und um einen Sitzungsschlüssel (KS) in Abhängigkeit von der Adresse (ADAP) des Zugriffspunkts, der Adresse (ADTM) der Mobilstation und dem aus der Bestätigungsmitteilung (MC) entnommenen Geheimcode (CS) zu bestimmen, und
den Zugriffspunkt (AP), um den Sitzungsschlüssel (KS) in Abhängigkeit von der Adresse (ADAP) des Zugriffspunkts, der Adresse (ADTM) der Mobilstation und dem aus der Verbindungsanforderungsmitteilung (MDC) entnommenen Geheimcode (CS) zu bestimmen, und um die Mobilstation in Abhängigkeit vom Sitzungsschlüssel (KS) zu authentifizieren.

15. System nach Anspruch 14, **dadurch gekennzeichnet, dass** die Verwaltungseinrichtung selbst den Sitzungsschlüssel bestimmt und ihn anstelle des Geheimcodes in die Bestätigungsmitteilung (MC) und die Verbindungsanforderungsmitteilung (MDC) einfügt.
